# EUROPEAN PATENT APPLICATION

(11) **EP 4 847 360 A1**
(43) Date of publication of application: **02.12.2026**
(21) Application number: 25747772.9
(22) Date of filing: 23.01.2025
(51) Int. Cl.: B62K 3/02

(54) **VERTICAL PIPE, FRAME, AND TWO-WHEELER**

(30) Priority: 31.01.2024 CN 202420247907 U
(71) Applicant: Dahon Tech (Shenzhen) Co., Ltd., Shenzhen, Guangdong 518100 (CN)
(72) Inventor: LI, Wenxu, Shenzhen, Guangdong 518100 (CN); HAN, Dewei, Shenzhen, Guangdong 518100 (CN)
(74) Representative: Bayramoglu et al.
(86) International application number: PCT/CN2025/074489
(87) International publication number: WO 2025/162204

(57) **Abstract**

A stem, a frame, and a bicycle are provided. The stem includes: a fixing base, a connecting tube, and a connector connected in sequence, where the fixing base is configured to mount a handlebar; the connector is configured to be connected to a front fork; the connecting tube is cut by a first plane perpendicular to an extension direction of the connecting tube to form a cross-section; a dimension of the cross-section in a first direction is smaller than a dimension of the cross-section in a second direction perpendicular to a riding direction of a bicycle, or a wall thickness of the cross-section in the first direction is smaller than a wall thickness of the cross-section in the second direction, or the dimension of the cross-section in the first direction is smaller than the dimension of the cross-section in the second direction perpendicular to the riding direction of the bicycle and the wall thickness of the cross-section in the first direction is smaller than the wall thickness of the cross-section in the second direction, such that a moment of inertia of the cross-section about a first axis extending in the first direction is greater than a moment of inertia of the cross-section about a second axis extending in the second direction; and the second direction is perpendicular to the first direction.

## Description

### TECHNICAL FIELD

The present disclosure relates to the technical field of two-wheeled vehicles, and in particular to a stem, a frame, and a two-wheeled vehicle.

### BACKGROUND TECHNOLOGY

Two-wheeled vehicles have become an important means of transportation due to their advantages such as light weight, speed, convenience, and environmental friendliness. Among them, bicycles, as an important type of two-wheeled vehicles, can not only serve as an eco-friendly means of transportation for travel, but also as fitness equipment for riding exercise. Therefore, bicycles have become an important means for travel and fitness in people's daily life.

The frame of a two-wheeled vehicle includes a stem. The stem includes a connector, a connecting tube, and a fixing base connected in sequence. The connector is connected to a front fork. The front fork is configured to mount a front wheel. The fixing base is configured to mount a handlebar. During riding, the rider holds and operates the handlebar to change the traveling direction of the front wheel, thereby changing the traveling direction of the two-wheeled vehicle.

When operating the handlebar to change the traveling direction of a two-wheeled vehicle, the rider applies a force to the stem via the handlebar. The stem transmits the force to the front fork, which finally transmits the force to the front wheel. In order to ensure the force transmission effect, the stem needs to have high lateral rigidity. However, conventional stems are all circular tubes, which have the problem of low lateral rigidity.

### CONTENT OF THE INVENTION

In view of this, the present disclosure provides a stem, a frame, and a two-wheeled vehicle that can improve lateral rigidity, so as to solve the problem of low lateral rigidity of a stem.

A stem is used for a two-wheeled vehicle, and includes: a fixing base, a connecting tube, and a connector connected in sequence, where the fixing base is configured to mount a handlebar; and the connector is configured to be connected to a front fork; and
the connecting tube is hollow; the connecting tube is cut by a first plane perpendicular to an extension direction of the connecting tube to form a cross-section; a dimension of the cross-section in a first direction is smaller than a dimension of the cross-section in a second direction perpendicular to a riding direction of the two-wheeled vehicle, or a wall thickness of the cross-section in the first direction is smaller than a wall thickness of the cross-section in the second direction, or the dimension of the cross-section in the first direction is smaller than the dimension of the cross-section in the second direction perpendicular to the riding direction of the two-wheeled vehicle and the wall thickness of the cross-section in the first direction is smaller than the wall thickness of the cross-section in the second direction, such that a moment of inertia of the cross-section about a first axis extending in the first direction is greater than a moment of inertia of the cross-section about a second axis extending in the second direction; and the second direction is perpendicular to the first direction.

In an embodiment, the connecting tube extends in a vertical direction; and the first direction is parallel to the riding direction.

In an embodiment, the connecting tube is inclined relative to a vertical direction; and the first direction is inclined relative to the riding direction.

In an embodiment, the cross-section of the connecting tube is in a shape of an elliptical ring; and the elliptical ring includes a major axis parallel to the second direction and a minor axis parallel to the first direction.

In an embodiment, the connecting tube includes a main body and a first reinforcing rib; the main body is a circular tube; and the first reinforcing rib protrudes from at least one end of the main body in the second direction.

In an embodiment, the first reinforcing rib protrudes from each of two ends of the main body in the second direction; and the first reinforcing ribs on the two ends are each in a shape of a lug and are symmetrically arranged about a center of the main body.

In an embodiment, the first reinforcing rib protrudes from one end of the main body in the second direction.

In an embodiment, the connecting tube further includes a second reinforcing rib; the second reinforcing rib protrudes from at least one end of the main body in the first direction; and
a height of the second reinforcing rib protruding from the main body is smaller than a height of the first reinforcing rib protruding from the main body.

In an embodiment, the second reinforcing rib protrudes from each of two ends of the main body in the first direction; and the second reinforcing ribs on the two ends are each in a shape of a lug and are symmetrically arranged about a center of the main body.

In an embodiment, the second reinforcing rib protrudes from one end of the main body in the first direction.

In an embodiment, the dimension of the cross-section in the first direction is smaller than the dimension of the cross-section in the second direction, and the wall thickness of the cross-section in the first direction is greater than the wall thickness of the cross-section in the second direction.

In an embodiment, the dimension of the cross-section in the first direction is greater than the dimension of the cross-section in the second direction, and the wall thickness of the cross-section in the first direction is smaller than the wall thickness of the cross-section in the second direction.

In an embodiment, the connecting tube is a metal tube or a carbon fiber tube.

In an embodiment, the connector and the fixing base are made of a same material as the connecting tube.

In an embodiment, the connecting tube, the connector, and the fixing base are made of a plastic material.

In an embodiment, the fixing base, the connecting tube, and the connector are welded, glued, or integrally formed with each other.

In an embodiment, the connector includes a first portion and a second portion connected to each other; and the first portion and the second portion are rotatably connected.

A frame includes a frame body, a front fork, and the above stem, where the stem and the front fork are mounted on the frame body; and the front fork is connected to the connector.

A two-wheeled vehicle includes the above frame.

In an embodiment, the two-wheeled vehicle is a bicycle.

In the above stem, frame, and two-wheeled vehicle, the dimension of the cross-section of the connecting tube in the second direction is greater than the dimension in the first direction, or the wall thickness of the cross-section in the second direction is greater than the wall thickness in the first direction, or the dimension of the cross-section of the connecting tube in the second direction is greater than the dimension in the first direction and the wall thickness of the cross-section in the second direction is greater than the wall thickness in the first direction, such that the moment of inertia of the cross-section of the connecting tube about the first axis extending in the first direction is greater than the moment of inertia of the cross-section about the second axis extending in the second direction. Compared with a method using a circular tube (where the cross-section of the circular tube has equal moments of inertia about the first axis and the second axis) in the prior art, the present disclosure improves the lateral rigidity of the stem, thereby meeting operational requirements. Moreover, when the stem is applied to a foldable two-wheeled vehicle, the above design can avoid an increase in the folding width caused by interference between the stem folded and a top tube, while maximizing the rigidity of the stem.

### DESCRIPTION OF THE DRAWINGS

FIG. 1 is a side view of a stem according to an embodiment of the present disclosure;
FIG. 2 is a front view of the stem shown in FIG. 1;
FIG. 3 is a cross-sectional view of a connecting tube of the stem shown in FIG. 1;
FIG. 4 is a dimensioned view of the connecting tube shown in FIG. 3; and
FIG. 5 is a cross-sectional view of a connecting tube of a stem according to another embodiment of the present disclosure.

### Reference Numerals:

100. stem; 10. fixing base; 20. connecting tube; 21. cross-section; 22. main body; 23. first reinforcing rib; 24. second reinforcing rib; 30. connector; 31. first portion; 32. second portion; X. first direction; and Y. second direction.

### SPECIFIC IMPLEMENTATIONS

To make the above objectives, features and advantages of the present disclosure more comprehensible, the specific implementations of the present disclosure are described in detail below with reference to the drawings. Many details are provided in the following description in order for a thorough understanding of the present disclosure. However, the present disclosure may be implemented in many other ways other than those described herein, and those skilled in the art may make similar improvements without departing from the connotation of the present disclosure. Therefore, the present disclosure is not limited to the specific embodiments disclosed below.

It should be noted that, in the description of the present disclosure, the terms such as "central", ''longitudinal'', ''transverse'', ''long'', ''wide'', ''thick'', "upper", "lower", ''front'', ''back'', "left", "right", "vertical", "horizontal", ''top'', ''bottom'', "inner", "outer", ''clockwise'', ''anticlockwise'', ''axial'', ''radial'' and ''circumferential'' are used to indicate orientations shown in the drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure.

In addition, the terms "first" and "second" are merely intended for a purpose of description, and shall not be understood as an indication or implication of relative importance or implicit indication of a quantity of indicated technical features. Therefore, a feature limited by "first" or "second" may explicitly or implicitly include at least one such feature. In the description of the present disclosure, "a plurality of" means at least two, such as two or three, unless otherwise clearly and specifically limited.

In the present disclosure, unless otherwise clearly specified, the terms such as ''mounting'', "interconnection", ''connection'' and "fixation" are intended to be understood in a broad sense. For example, the "connection" may be a fixed connection, removable connection or integral connection; may be a mechanical connection or electrical connection; may be a direct connection or indirect connection using a medium; and may be a communication or interaction between two elements. Those of ordinary skill in the art may understand the specific meanings of the above terms in the present disclosure based on the specific situation.

In the present disclosure, unless otherwise explicitly specified, when it is described that a first feature is ''above'' or ''below'' a second feature, it indicates that the first and second features are in direct contact or the first and second features are in indirect contact through an intermediate feature. In addition, when it is described that the first feature is "over", "above" and "on" the second feature, it indicates that the first feature is directly or obliquely above the second feature, or simply indicates that an altitude of the first feature is higher than that of the second feature. When it is described that the first feature is ''under'', ''below'' or ''beneath'' the second feature, it indicates that the first feature is directly or obliquely under the second feature or simply indicates that an altitude of the first feature is lower than that of the second feature.

It should be noted that when a component is ''fixed'' or ''provided'' on another component, the component may be fixed on another component directly or via an intermediate component. When a component is connected to another component, the component may be connected to another component directly or via an intermediate component. The terms "vertical", "horizontal", "upper", "lower", "left", "right" and other similar expressions used herein are for illustrative purposes only, rather than to mean the only implementation.

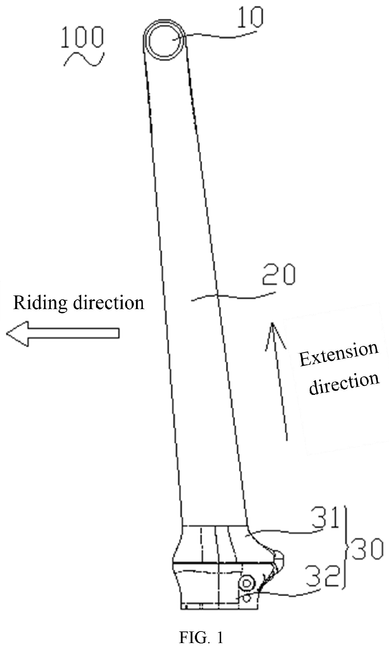

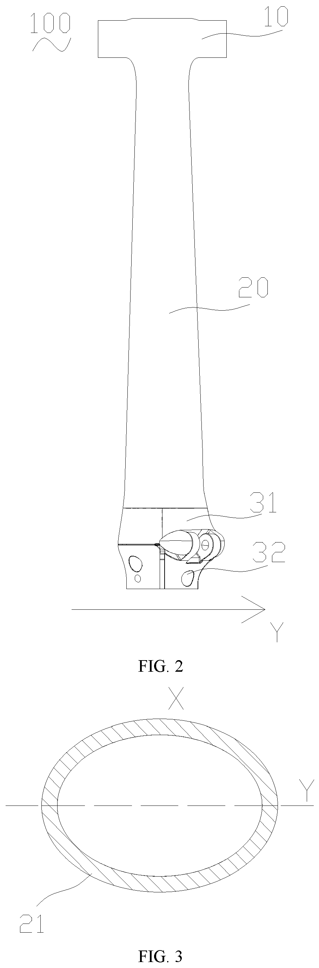

Referring to FIGS. 1 and 2, an embodiment of the present disclosure provides stem 100. The stem 100 is used for a two-wheeled vehicle, and includes fixing base 10, connecting tube 20, and connector 30 connected in sequence. That is, two ends of the connecting tube 20 in an extension direction are respectively provided with the fixing base 10 and the connector 30. The fixing base 10 is configured to mount a handlebar, and the connector 30 is configured to be connected to a front fork.

Furthermore, referring to FIG. 3, the connecting tube 20 is cut by a first plane perpendicular to the extension direction of the connecting tube 20 to form cross-section 21. A dimension of the cross-section 21 in first direction X is smaller than a dimension of the cross-section 21 in second direction Y, or a wall thickness of the cross-section 21 in the first direction X is smaller than a wall thickness of the cross-section 21 in the second direction Y, or the dimension of the cross-section 21 in the first direction X is smaller than the dimension of the cross-section 21 in the second direction Y and the wall thickness of the cross-section 21 in the first direction X is smaller than the wall thickness of the cross-section 21 in the second direction Y, such that a moment of inertia of the cross-section 21 about a first axis extending in the first direction is greater than a moment of inertia of the cross-section 21 about a second axis extending in the second direction. That is, all of the above three configurations can make the moment of inertia of the cross-section 21 about the first axis extending in the first direction greater than the moment of inertia of the cross-section 21 about the second axis extending in the second direction. The second direction Y is perpendicular to the first direction X, and the second direction Y is perpendicular to a riding direction (forward direction) of the two-wheeled vehicle. It should be noted here that the first direction X and the second direction Y lie in the same cross-section 21. The dimension of the cross-section 21 in the first direction X smaller than the dimension of the cross-section 21 in the second direction Y means that a maximum dimension of the cross-section 21 in the first direction X is smaller than a maximum dimension of the cross-section 21 in the second direction Y. The wall thickness of the cross-section 21 in the first direction X smaller than the wall thickness of the cross-section 21 in the second direction Y means that a maximum wall thickness of the cross-section 21 in the first direction X is smaller than a maximum wall thickness of the cross-section 21 in the second direction Y. It should also be noted here that the moment of inertia is a geometric quantity that usually describes the property of a cross-section resisting bending, and the moment of inertia of a cross-section about an axis is related to the cross-sectional dimension and the wall thickness of the cross-section in a direction perpendicular to that axis.

In some specific embodiments, when the connecting tube 20 extends in a vertical direction, that is, the extension direction of the connecting tube 20 is parallel to the vertical direction, the cross-section 21 is perpendicular to the vertical direction, and the first direction X is parallel to the riding direction. In other specific embodiments, when the connecting tube 20 does not extend in the vertical direction, that is, when the extension direction of the connecting tube 20 is inclined relative to the vertical direction, the cross-section 21 is not perpendicular to the vertical direction, and the first direction X is inclined relative to the riding direction.

In the stem 100 provided by the embodiment of the present disclosure, the dimension of the cross-section 21 of the connecting tube 20 in the second direction Y is greater than the dimension in the first direction X, or the wall thickness of the cross-section 21 in the second direction Y is greater than the wall thickness in the first direction X, or the dimension of the cross-section 21 of the connecting tube 20 in the second direction Y is greater than the dimension in the first direction X and the wall thickness of the cross-section 21 in the second direction Y is greater than the wall thickness in the first direction X, such that the moment of inertia of the cross-section 21 of the connecting tube 20 about the first axis extending in the first direction X is greater than the moment of inertia of the cross-section 21 about the second axis extending in the second direction Y. Compared with a method using a circular tube (where the cross-section of the circular tube has equal moments of inertia about the first axis and the second axis) in the prior art, the present disclosure improves the lateral rigidity of the stem 100, thereby meeting operational requirements. Moreover, when the stem 100 is applied to a foldable two-wheeled vehicle, the above design can avoid an increase in the folding width caused by interference between the stem 100 folded and a top tube, while maximizing the rigidity of the stem 100.

In some embodiments, still referring to FIG. 3, the cross-section 21 of the connecting tube 20 is in a shape of an elliptical ring. In this case, a major axis of the elliptical ring is parallel to the second direction Y, and a minor axis of the elliptical ring is parallel to the first direction X. When the cross-section 21 of the connecting tube 20 is in a shape of an elliptical ring, the maximum dimension of the cross-section 21 in the first direction X is smaller than the maximum dimension of the cross-section in the second direction Y, and the wall thickness of the cross-section 21 in the first direction X is equal to the wall thickness in the second direction Y.

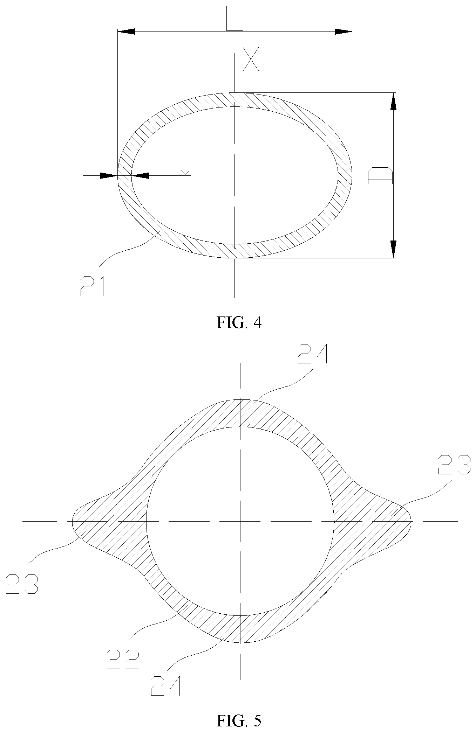

Referring to FIG. 4, according to the moment of inertia formula, for the stem 100 provided by the embodiment of the present disclosure, the moment of inertia of the cross-section 21 of the connecting tube 20 about the first axis extending in the first direction X is: *Iₓ=πL*³D/64-*π*(*L -* 2*t*)³(D-2t)/64, and the moment of inertia of the cross-section 21 about the second axis extending in the second direction Y is: *I_{y}* =π *D*³ L/64-*π* (D - 2*t*)³ (L-2t)/64, where D denotes an outer diameter of the cross-section 21 in the first direction X (the maximum dimension of the cross-section 21 in the first direction X), L denotes an outer diameter of the cross-section 21 in the second direction Y (the maximum dimension of the cross-section 21 in the second direction Y), and t denotes the wall thickness of the connecting tube 20.

*Iₓ-I_{y}*=[*πL*³D/64-π(*L* - 2*t*)³(D-2*t*)/64]-[π*D*³L/64-*π*(*D* - 2*t*)³(L-2t)/64]. Through calculation, it can be found that *Iₓ - I_{y}* is greater than 0. Thus, designing the cross-section 21 of the connecting tube 20 as an elliptical ring makes the moment of inertia of the cross-section 21 of the connecting tube 20 about the first axis extending in the first direction X greater than the moment of inertia of the cross-section 21 about the second axis extending in the second direction Y. This improves the lateral rigidity of the stem 100, thereby meeting operational requirements.

In other embodiments, the cross-section 21 of the connecting tube 20 may also be formed into other irregular, specially shaped structures. For example, in some specific implementations, referring to FIG. 5, the connecting tube 20 includes main body 22 and first reinforcing rib 23. The main body 22 is a circular tube, and the first reinforcing rib 23 protrudes from at least one end of the main body 22 in the second direction Y. In this way, the outer diameter of the cross-section 21 of the connecting tube 20 in the second direction Y is greater than the outer diameter in the first direction X, and the wall thickness of the cross-section 21 of the connecting tube 20 in the second direction Y is greater than the wall thickness of the cross-section 21 in the first direction X. The moment of inertia of the cross-section 21 about the first axis extending in the first direction X is a sum of the moment of inertia of a portion of the cross-section corresponding to the main body 22 about the first axis extending in the first direction X and the moment of inertia of a portion of the cross-section corresponding to the first reinforcing rib 23 about the first axis extending in the first direction X, and the moment of inertia of the cross-section 21 about the second axis extending in the second direction Y is the moment of inertia of the portion of the cross-section corresponding to the main body 22 about the second axis extending in the second direction Y. It can be seen that the moment of inertia of the cross-section 21 of the connecting tube 20 about the first axis extending in the first direction X is greater than the moment of inertia of the cross-section 21 about the second axis extending in the second direction Y. This improves the lateral rigidity of the stem 100, thereby meeting operational requirements.

Specifically, the first reinforcing rib 23 protrudes from each of two ends of the main body 22 in the second direction Y, and the first reinforcing ribs 23 on the two ends are each in a shape of a lug and are symmetrically arranged about a center of the main body 22. This makes the structure of the connecting tube 20 symmetric, facilitating the processing and manufacture of the connecting tube 20. It is conceivable that in other embodiments, the first reinforcing rib 23 may protrude from only one of the ends of the main body 22 in the second direction Y, which is not limited herein.

Furthermore, the connecting tube 20 further includes second reinforcing rib 24, and the second reinforcing rib 24 protrudes from at least one end of the main body 22 in the first direction X. A height of the second reinforcing rib 24 protruding from the main body 22 is smaller than a height of the first reinforcing rib 23 protruding from the main body 22. The second reinforcing rib 24 serves to reinforce the connecting tube 20, and does not cause the outer diameter of the cross-section 21 of the connecting tube 20 in the first direction X to be greater than the outer diameter in the second direction Y, or cause the wall thickness of the cross-section 21 of the connecting tube 20 in the first direction X to be greater than the wall thickness of the cross-section 21 in the second direction Y. Thus, the moment of inertia of the cross-section 21 about the first axis extending in the first direction X is greater than the moment of inertia of the cross-section 21 about the second axis extending in the second direction Y. This improves the lateral rigidity of the stem 100, thereby meeting operational requirements.

In some specific implementations, the second reinforcing rib 24 protrudes from each of two ends of the main body 22 in the first direction X, and the second reinforcing ribs 24 on the two ends are each in a shape of a lug and are symmetrically arranged about the center of the main body 22. This further improves the strength of the connecting tube 20. It is conceivable that in other specific implementations, the second reinforcing rib 24 may protrude from only one of the ends of the main body 22 in the first direction X, which is also not limited herein.

It is understandable that in other embodiments, the cross-section 21 of the connecting tube 20 may also be configured in other manners. For example, the dimension of the cross-section 21 in the first direction X is smaller than the dimension of the cross-section 21 in the second direction Y, while the wall thickness of the cross-section 21 in the first direction X is slightly greater than the wall thickness of the cross-section 21 in the second direction Y, or the dimension of the cross-section 21 in the first direction X is slightly greater than the dimension of the cross-section 21 in the second direction Y, while the wall thickness of the cross-section 21 in the first direction X is smaller than the wall thickness of the cross-section 21 in the second direction Y. Any configuration that can make the moment of inertia of the cross-section 21 about the first axis extending in the first direction greater than the moment of inertia of the cross-section 21 about the second axis extending in the second direction is acceptable, which is not limited herein.

In some embodiments, the connecting tube 20 is a metal tube or a carbon fiber tube. Specifically, the connector 30 and the fixing base 10 are made of the same material as the connecting tube 20. It is conceivable that in other embodiments, the material of the connecting tube 20 is not limited. For example, the connecting tube 20 may also be made of a plastic material, while the connector 30 and the fixing base 10 are also made of a plastic material.

Furthermore, the fixing base 10, the connecting tube 20, and the connector 30 are welded, glued, or integrally formed.

In some specific embodiments, the connector 30 includes first portion 31 and second portion 32 connected to each other. The first portion 31 and the second portion 32 are rotatable relative to each other to facilitate folding or unfolding of the two-wheeled vehicle. It should be understood that in other embodiments, the structure of the connector 30 is not limited, as long as it can be connected to the front fork.

Another embodiment of the present disclosure further provides a frame, including a frame body, a front fork, and the stem 100 described above. The stem 100 and the front fork are mounted on the frame body, and the front fork is connected to the connector 30. The frame including the stem 100 has the same beneficial effects as the stem 100, which will not be repeated in detail here.

Yet another embodiment of the present disclosure further provides a two-wheeled vehicle including the above frame. The two-wheeled vehicle has the same beneficial effects as the stem 100 and the frame, which will not be repeated in detail here.

In some specific implementations, the two-wheeled vehicle is a bicycle. It is conceivable that in other implementations, the type of the two-wheeled vehicle is not limited.

The technical features of the foregoing embodiments can be employed in arbitrary combinations. For brevity of description, not all possible combinations of the technical features of the foregoing embodiments are described. However, the combinations of the technical features should be construed as falling within the scope described in this specification as long as there is no contradiction in the combinations.

Only several implementations of the present disclosure are described in detail in the foregoing embodiments, but they should not therefore be construed as limiting the scope of the present disclosure. It should be noted that those of ordinary skill in the art can further make several variations and improvements without departing from the concept of the present disclosure, and these variations and improvements all fall within the protection scope of the present disclosure. Therefore, the protection scope of the present disclosure shall be subject to the appended claims.

## Claims

1. A stem, used for a two-wheeled vehicle, and comprising: a fixing base (10), a connecting tube (20), and a connector (30) connected in sequence, wherein the fixing base (10) is configured to mount a handlebar; and the connector (30) is configured to be connected to a front fork; and
the connecting tube (20) is hollow; the connecting tube (20) is cut by a first plane perpendicular to an extension direction of the connecting tube (20) to form a cross-section (21); a dimension of the cross-section (21) in a first direction (X) is smaller than a dimension of the cross-section (21) in a second direction (Y) perpendicular to a riding direction of the two-wheeled vehicle, or a wall thickness of the cross-section (21) in the first direction (X) is smaller than a wall thickness of the cross-section (21) in the second direction (Y), or the dimension of the cross-section (21) in the first direction (X) is smaller than the dimension of the cross-section (21) in the second direction (Y) perpendicular to the riding direction of the two-wheeled vehicle and the wall thickness of the cross-section (21) in the first direction (X) is smaller than the wall thickness of the cross-section (21) in the second direction (Y), such that a moment of inertia of the cross-section (21) about a first axis extending in the first direction is greater than a moment of inertia of the cross-section (21) about a second axis extending in the second direction; and the second direction (Y) is perpendicular to the first direction (X).

2. The stem according to claim 1, wherein the connecting tube (20) extends in a vertical direction; and the first direction (X) is parallel to the riding direction.

3. The stem according to claim 1, wherein the connecting tube (20) is inclined relative to a vertical direction; and the first direction (X) is inclined relative to the riding direction.

4. The stem according to claim 1, wherein the cross-section (21) of the connecting tube (20) is in a shape of an elliptical ring; and the elliptical ring comprises a major axis parallel to the second direction (Y) and a minor axis parallel to the first direction (X).

5. The stem according to claim 1, wherein the connecting tube (20) comprises a main body (22) and a first reinforcing rib (23); the main body (22) is a circular tube; and the first reinforcing rib (23) protrudes from at least one end of the main body (22) in the second direction (Y).

6. The stem according to claim 5, wherein the first reinforcing rib (23) protrudes from each of two ends of the main body (22) in the second direction (Y); and the first reinforcing ribs (23) on the two ends are each in a shape of a lug and are symmetrically arranged about a center of the main body (22).

7. The stem according to claim 5, wherein the first reinforcing rib (23) protrudes from one end of the main body (22) in the second direction (Y).

8. The stem according to claim 5, wherein the connecting tube (20) further comprises a second reinforcing rib (24); the second reinforcing rib (24) protrudes from at least one end of the main body (22) in the first direction (X); and
a height of the second reinforcing rib (24) protruding from the main body (22) is smaller than a height of the first reinforcing rib (23) protruding from the main body (22).

9. The stem according to claim 8, wherein the second reinforcing rib (24) protrudes from each of two ends of the main body (22) in the first direction (X); and the second reinforcing ribs (24) on the two ends are each in a shape of a lug and are symmetrically arranged about a center of the main body (22).

10. The stem according to claim 8, wherein the second reinforcing rib (24) protrudes from one end of the main body (22) in the first direction (X).

11. The stem according to claim 1, wherein the dimension of the cross-section (21) in the first direction (X) is smaller than the dimension of the cross-section (21) in the second direction (Y), and the wall thickness of the cross-section (21) in the first direction (X) is greater than the wall thickness of the cross-section (21) in the second direction (Y).

12. The stem according to claim 1, wherein the dimension of the cross-section (21) in the first direction (X) is greater than the dimension of the cross-section (21) in the second direction (Y), and the wall thickness of the cross-section (21) in the first direction (X) is smaller than the wall thickness of the cross-section (21) in the second direction (Y).

13. The stem according to claim 1, wherein the connecting tube (20) is a metal tube or a carbon fiber tube.

14. The stem according to claim 1, wherein the connector (30) and the fixing base (10) are made of a same material as the connecting tube (20).

15. The stem according to claim 14, wherein the connecting tube (20), the connector (30), and the fixing base (10) are made of a plastic material.

16. The stem according to claim 1, wherein the fixing base (10), the connecting tube (20), and the connector (30) are welded, glued, or integrally formed with each other.

17. The stem according to claim 1, wherein the connector (30) comprises a first portion (31) and a second portion (32) connected to each other; and the first portion (31) and the second portion (32) are rotatably connected.

18. A frame, comprising a frame body, a front fork, and the stem according to any one of claims 1 to 17, wherein the stem and the front fork are mounted on the frame body; and the front fork is connected to the connector (30).

19. A two-wheeled vehicle, comprising the frame according to claim 18.

20. The two-wheeled vehicle according to claim 19, wherein the two-wheeled vehicle is a bicycle.
